# EUROPEAN PATENT SPECIFICATION

(11) **EP 3 943 236 B1**
(45) Date of publication and mention of the grant of the patent: **06.09.2023**
(21) Application number: 20844533.8
(22) Date of filing: 07.07.2020
(51) Int. Cl.: B23Q 3/155, B23Q 7/02, B23Q 7/04, B23Q 7/14, B23Q 1/01, B23Q 3/157

(54) **MULTI-SPINDLE FULLY AUTOMATIC VERTICAL MACHINING CENTER**
VOLLAUTOMATISCHES VERTIKALES MEHRSPINDELBEARBEITUNGSZENTRUM
CENTRE D'USINAGE VERTICAL ENTIÈREMENT AUTOMATIQUE À BROCHES MULTIPLES

(30) Priority: 19.07.2019 CN 201910657286
(43) Date of publication of application: 26.01.2022
(73) Proprietor: Kede Numerical Control Co., Ltd., Dalian, Liaoning 116000 (CN)
(72) Inventor: CHEN, Hu, Dalian, Liaoning 116000 (CN); DU, Changlin, Dalian, Liaoning 116000 (CN); WANG, Lianyang, Dalian, Liaoning 116000 (CN); TANG, Rui, Dalian, Liaoning 116000 (CN); YIN, Shuqiang, Dalian, Liaoning 116000 (CN); LI, Ang, Dalian, Liaoning 116000 (CN); GONG, Xinglin, Dalian, Liaoning 116000 (CN); LI, Shaozhi, Dalian, Liaoning 116000 (CN)
(74) Representative: Murgitroyd & Company
(86) International application number: PCT/CN2020/100616
(87) International publication number: WO 2021/012944

(56) References cited:
- EP-A1- 1 637 279
- CN-A- 101 480 780
- CN-A- 103 213 034
- CN-A- 106 862 981
- CN-A- 109 909 810
- CN-A- 110 449 956
- DE-A1- 10 336 156
- JP-A- S62 236 646
- US-A1- 2002 006 764
- US-A1- 2004 110 614
- US-A1- 2010 313 718

## Description

### BACKGROUND OF THE INVENTION

### 1. Technical Field

The invention relates to the technical field of machining, in particular to a multiple-spindle full-automatic vertical machining center.

### 2. Description of Related Art

A vertical machining center generally consists of a lathe bed, a sliding table, a saddle, a ram, a cradle, a rotary table and a spindle, etc. A workpiece is fixed on the rotary table, and the spindle moves through an XYZ axis and an AC axis to perform complex machining on the workpiece.

At present, a vertical machining center with a conveyor belt which may realize automatic loading and unloading generally has only one spindle head, and only one part may be machined at a time. Moreover, due to the inability to realize automatic loading and unloading, labor is wasted and efficiency is low.

EP 1 637 279 A1 discloses a machining center according to the preamble of claim 1.

### BRIEF SUMMARY OF THE INVENTION

The invention, which is defined in claim 1, provides a multiple-spindle full-automatic vertical machining center to overcome the above technical problems.

The invention comprises an actuator, a lathe bed, a feeding area, a tooling area, a machining area and a tool changer area.

The actuator comprises a ram, a saddle and a sliding table, the feeding area crosses the lathe bed, the feeding area and the tool changer area are respectively located on two opposite sides of the machining area, the feeding area is located at a forefront end of the machining center, and the actuator moves above the feeding area, the tooling area, the machining area and the tool changer area.

Further, the feeding area is a conveyor belt, a plurality of reloading areas are distributed on the conveyor belt at equal intervals, and each reloading area is provided with a plurality of station points for placing raw materials.

Further, the machining area comprises a cradle rotary table and worktables, and the number of the worktables is the same as that of the station points on each reloading area.

The tool changer area comprises a chain tool rest and cutters fixed on the chain tool rest.

According to the invention, the tooling area comprises a clamping tool and a bracket, the bracket is used for fixing the clamping tool, and the tooling area is located between the feeding area and the machining area.

Further, the tooling area comprises a clamping tool, and the clamping tool is fixed on the chain tool rest.

Further, the ram fixes a plurality of spindle heads whose number is the same as that of the worktables, and the spindle heads may be connected with the cutters and the clamping tool through movement.

Further, a distance the conveyor belt moves each time is a distance between every two reloading areas.

Further, the tool changer area further comprises a tool changer door, and the tool changer door is arranged between the tool changer area and the machining area.

Compared with the prior art, a conveyor belt is arranged in front of the whole machine tool and crosses the machine tool, a length of the conveyor belt may be increased or decreased as required, and by increasing the length of the conveyor belt, more raw materials and finished parts may be stored, so labor is saved.

### BRIEF DESCRIPTION OF THE SEVERAL VIEWS OF THE DRAWINGS

In order to more clearly explain the embodiments of the invention or the technical solution in the prior art, the following will briefly introduce the drawings needed in the description of the embodiments or the prior art. Obviously, the drawings in the following description are only some embodiments of the invention. For those of ordinary skill in the art, other drawings can be obtained according to the provided drawings without paying creative labor.
Fig. 1 is an overall structural diagram of the invention;
Fig. 2 is a structural diagram when a tool changer door is open according to the invention;
Fig. 3 is an overall structural diagram when raw materials are machined into finished parts according to the invention; and
Fig. 4 is an overall structural diagram when finished parts are on a conveyor belt according to the invention.

### DETAILED DESCRIPTION OF THE INVENTION

In order to clarify the purpose, technical solution and advantages of the embodiments of the invention, the technical solution in the embodiments of the invention will be described clearly and completely below with reference to the drawings in the embodiments of the invention. Obviously, the described embodiments are only part of the embodiments of the invention, not all of the embodiments.

The invention comprises an actuator 4, a lathe bed 9, a feeding area, a tooling area, a machining area and a tool changer area.

The actuator 4 comprises a ram 1, a saddle 2 and a sliding table 3, the feeding area crosses the lathe bed 9, the feeding area and the tool changer area are respectively located on two opposite sides of the machining area, the feeding area is located at a forefront end of the machining center, and the actuator 4 moves above the feeding area, the tooling area, the machining area and the tool changer area. Further, the feeding area is a conveyor belt 7, a plurality of reloading areas 15 are distributed on the conveyor belt at equal intervals, and each reloading area 15 is provided with a plurality of station 6 points for placing raw materials 16.

Further, the machining area comprises a cradle rotary table 8 and worktables 14, and the number of the worktables 14 is the same as that of the station points 6 on each reloading area 15.

The tool changer area comprises a chain tool rest and cutters 11 fixed on the chain tool rest.

According to the invention, the tooling area comprises a clamping tool 12 and a bracket 13, the bracket 13 is used for fixing the clamping tool 12, and the tooling area is located between the feeding area and the machining area.

Further, the tooling area comprises a clamping tool 12, and the clamping tool 12 is fixed on the chain tool rest.

Further, the ram 1 fixes a plurality of spindle heads 10 whose number is the same as that of the worktables 14, and the spindle heads 10 may be connected with the cutters 11 and the clamping tool 12 through movement.

Further, a distance the conveyor belt moves each time is a distance between every two reloading areas 15.

Further, the tool changer area further comprises a tool changer door 5, and the tool changer door 5 is arranged between the tool changer area and the machining area.

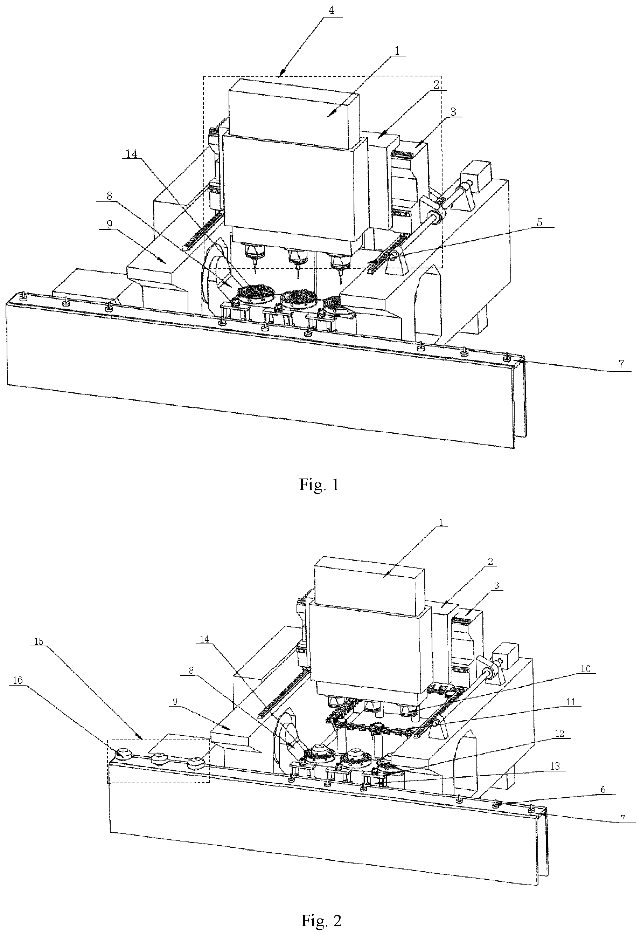

Embodiment 1: Specifically, as shown in Fig. 1, the sliding table 3 moves forward, that is, in the direction of the conveyor belt 7, so that the ram 1 reaches the tooling area, and a control end of the machine tool automatically adjusts the position of the saddle 2 to keep a main shaft of the ram 1 concentric with the clamping tooling 12 below. At this point, the position of the ram 1 is set as point A. In this embodiment, three spindle heads 10 are provided, and at this point, the ram 1 moves downward to drive the three spindle heads 10 to grab the clamping tool 12 below and ascend to a specified height.

As shown in Fig. 2, the sliding table 3 continues to move forward, so that the ram 1 reaches above the conveyor belt 7, the plurality of reloading areas 15 are equidistantly arranged on the conveyor belt 7, the conveyor belt 7 operates intermittently, and a distance the conveyor belt operates each time is the distance between two adjacent reloading areas. Each reloading area 15 is provided with three station points 6 for fixing raw materials. The conveyor belt 7 starts to move, and the central axes of the three spindle heads 10 are respectively concentric with the raw materials 16 on the three station points 6. At this point, the position of the ram 1 is set as point B.

The ram 1 moves downward, the raw materials 16 are clamped by the clamping tool 12, the ram 1 rises to a specified height, and the sliding table 3 moves backward to make the ram 1 reach just above the worktable 14. At this point, the position of the ram 1 is set as point C, the ram moves downward, and the clamping tool 12 is released to unload the raw materials 16 on the worktable. A clamping device on the worktable positions and clamps the raw materials, and the ram 1 rises to the specified height again. The ram 1 moves to point A and moves downward, the clamping tool 12 is removed and placed on the bracket 13, and then the ram 1 rises to the specified height again.

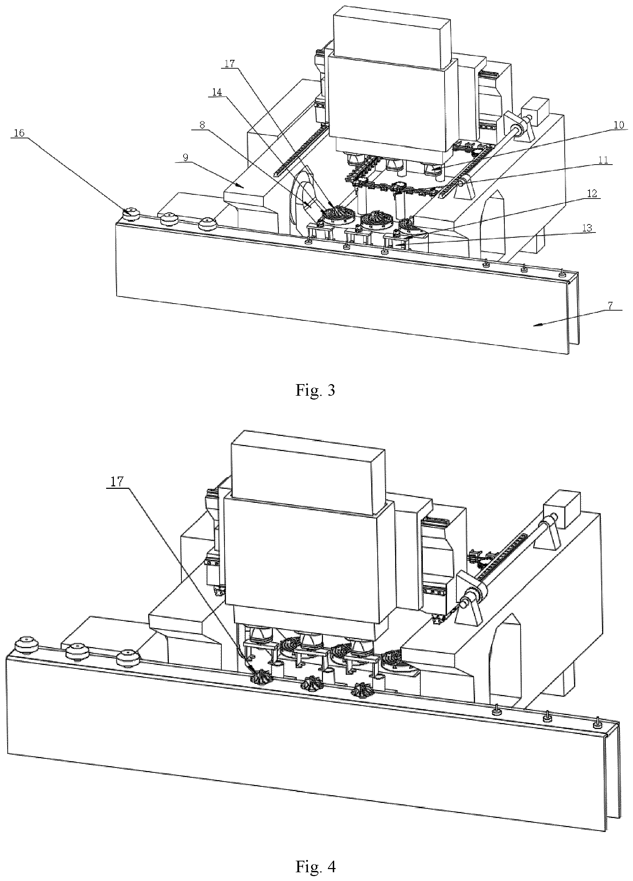

The tool changer door 5 is opened, and the sliding table 3 moves backward, so that the ram 1 drives the three spindle heads 10 to reach a designated tool changing point in the tool changer area. At this point, the position of the ram 1 is set to point D, and the chain tool rest with the cutters 11 fixed thereon rotates to move a cutter to be used to the tool changing point. The ram 1 moves downward, so that the spindle head grabs the cutter at the corresponding tool change point, and then the ram 1 rises to a specified height and moves to point C. At the same time, the tool changer door 5 is closed, and the preparation work before machining is completed. As shown in Fig. 3, the ram 1 moves downward, so that the raw materials are machined by the cutter and a finished part 17 is obtained.

After machining, the tool changer door 5 is opened, and the ram 1 rises to a specified height and moves backward to point D. At the same time, the clamping device of the worktable loosens the finished part, the spindle head loads the cutter on the chain tool rest, the ram 1 moves forward to point A, and the ram 1 moves downward to grab the clamping tool. At this point, the tool changer door 5 is closed and the ram 1 rises to a specified height. The ram 1 moves backward to point C, at the same time, the ram 1 moves downward, so that the clamping tool clamps the finished part 17, and the ram 1 rises to the specified height again. As shown in Fig. 4, the ram 1 moves to point B, the ram 1 moves downward, the clamping tool is released, the finished part is unloaded at the station point below, the finished part is transported outside the machine tool by the conveyor belt, then the next batch of raw materials are sent to the inside of the machine tool, and the above steps are repeated.

Embodiment 2: On the basis of Embodiment 1, the clamping tool may also be placed on the chain tool rest together with the cutters, and the grasping process of the clamping tool by the spindle head is the same as that of the cutters, which will not be repeated here.

In this application, the tool changer door 5 is closed during machining, which effectively blocks machining waste and dust outside the tool changer area, and ensures the cleanliness of the tool changer area; and one side of the actuator 4 is provided with the conveyor belt, and the other side is provided with the worktables and the tool changer area, so that the working stroke of the spindle head is shortened, and the whole machining process is simpler and more convenient.

## Claims

1. A multiple-spindle full-automatic vertical machining center, comprising an actuator (4), a lathe bed (9), a feeding area, a tooling area, a machining area and a tool changer area;
wherein the actuator (4) comprises a ram (1), a saddle (2) and a sliding table (3), the feeding area crosses the lathe bed (9), the feeding area and the tool changer area are respectively located on two opposite sides of the machining area, the feeding area is located at a forefront end of the machining center, and the actuator (4) moves above the feeding area, the tooling area, the machining area and the tool changer area, **characterised in that**
the tooling area comprises a clamping tool (12) and a bracket (13), the bracket (13) being suitable for fixing the clamping tool (12) and the tooling area is located between the feeding area and the machining area.

2. The multiple-spindle full-automatic vertical machining center according to Claim 1, wherein the feeding area is a conveyor belt (7), a plurality of reloading areas (15) are distributed on the conveyor belt at equal intervals, and each reloading area (15) is provided with a plurality of station points (6) for placing raw materials (16).

3. The multiple-spindle full-automatic vertical machining center according to Claim 2, wherein the machining area comprises a cradle rotary table (8) and worktables (14), the number of the worktables (14) is the same as that of the station points (6) on each reloading area (15), and the tool changer area comprises a chain tool rest and cutters (11) fixed on the chain tool rest.

4. The multiple-spindle full-automatic vertical machining center according to Claim 3, wherein the clamping tool (12) can be fixed on the chain tool rest.

5. The multiple-spindle full-automatic vertical machining center according to Claim 4, wherein the ram (1) fixes a plurality of spindle heads (10) whose number is the same as that of the worktables (14), and the spindle heads (10) may be connected with the cutters (11) and the clamping tool (12) through movement.

6. The multiple-spindle full-automatic vertical machining center according to Claim 5, wherein a distance the conveyor belt moves each time is a distance between every two reloading areas (15).

7. The multiple-spindle full-automatic vertical machining center according to Claim 6, wherein the tool changer area further comprises a tool changer door (5), and the tool changer door (5) is arranged between the tool changer area and the machining area.

## Patentansprüche

1. Ein vollautomatisches vertikales Mehrspindelbearbeitungszentrum, das einen Aktor (4), ein Drehmaschinenbett (9), einen Zufuhrbereich, einen Bestückungsbereich, einen Bearbeitungsbereich und einen Werkzeugwechslerbereich beinhaltet;
wobei der Aktor (4) einen Kolben (1), einen Sattel (2) und einen Schiebetisch (3) beinhaltet, der Zufuhrbereich das Drehmaschinenbett (9) kreuzt, der Zufuhrbereich und der Werkzeugwechslerbereich jeweils auf zwei entgegengesetzten Seiten des Bearbeitungsbereichs angeordnet sind, der Zufuhrbereich an einem Vorderseitenende des Bearbeitungszentrums angeordnet ist und sich der Aktor (4) über dem Zufuhrbereich, dem Bestückungsbereich, dem Bearbeitungsbereich und dem Werkzeugwechslerbereich bewegt, **dadurch gekennzeichnet, dass** der Bestückungsbereich ein Spannwerkzeug (12) und eine Halterung (13) beinhaltet, wobei die Halterung (13) geeignet ist, um das Spannwerkzeug (12) zu fixieren und der Bestückungsbereich zwischen dem Zufuhrbereich und dem Bearbeitungsbereich angeordnet ist.

2. Vollautomatisches vertikales Mehrspindelbearbeitungszentrum gemäß Anspruch 1, wobei der Zufuhrbereich ein Förderband (7) ist, eine Vielzahl von Nachladebereichen (15) in gleichen Abständen auf dem Förderband verteilt sind und jeder Nachladebereich (15) mit einer Vielzahl von Vermessungspunkten (6) zum Platzieren von Rohmaterialien (16) bereitgestellt ist.

3. Vollautomatisches vertikales Mehrspindelbearbeitungszentrum gemäß Anspruch 2, wobei der Bearbeitungsbereich einen Wiegendrehtisch (8) und Arbeitstische (14) beinhaltet, wobei die Anzahl der Arbeitstische (14) die gleiche wie die der Vermessungspunkte (6) auf jedem Nachladebereich (15) ist, und der Werkzeugwechslerbereich eine Kettenwerkzeugauflage und Schneiden (11), die auf der Kettenwerkzeugauflage fixiert sind, beinhaltet.

4. Vollautomatisches vertikales Mehrspindelbearbeitungszentrum gemäß Anspruch 3, wobei das Spannwerkzeug (12) auf der Kettenwerkzeugauflage fixiert sein kann.

5. Vollautomatisches vertikales Mehrspindelbearbeitungszentrum gemäß Anspruch 4, wobei der Kolben (1) eine Vielzahl von Spindelköpfen (10) fixiert, deren Anzahl die gleiche wie die der Arbeitstische (14) ist, und die Spindelköpfe (10) durch Bewegung mit den Schneiden (11) und dem Spannwerkzeug (12) verbunden sein können.

6. Vollautomatisches vertikales Mehrspindelbearbeitungszentrum gemäß Anspruch 5, wobei eine Distanz, die sich das Förderband jedes Mal bewegt, eine Distanz zwischen den zwei Nachladebereichen (15) ist.

7. Vollautomatisches vertikales Mehrspindelbearbeitungszentrum gemäß Anspruch 6, wobei der Werkzeugwechslerbereich ferner eine Werkzeugwechslertür (5) beinhaltet und die Werkzeugwechslertür (5) zwischen dem Werkzeugwechslerbereich und dem Bearbeitungsbereich angeordnet ist.

## Revendications

1. Un centre d'usinage vertical entièrement automatique à broches multiples, comprenant un actionneur (4), un banc de tour (9), une zone d'amenée, une zone d'outil, une zone d'usinage et une zone de changeur d'outil ;
dans lequel l'actionneur (4) comprend un coulisseau (1), une sellette (2) et une table glissante (3), la zone d'amenée traverse le banc de tour (9), la zone d'amenée et la zone de changeur d'outil sont situées respectivement sur deux côtés opposés de la zone d'usinage, la zone d'amenée est située au niveau d'une extrémité de premier plan du centre d'usinage, et l'actionneur (4) se meut au-dessus de la zone d'amenée, de la zone d'outil, de la zone d'usinage et de la zone de changeur d'outil, **caractérisé en ce que** la zone d'outil comprend un outil de serrage (12) et un support (13), le support (13) étant adapté pour la fixation de l'outil de serrage (12) et la zone d'outil est située entre la zone d'amenée et la zone d'usinage.

2. Le centre d'usinage vertical entièrement automatique à broches multiples selon la revendication 1, dans lequel la zone d'amenée est une courroie transporteuse (7), une pluralité de zones de rechargement (15) sont réparties sur la courroie transporteuse à intervalles égaux, et chaque zone de rechargement (15) est pourvue d'une pluralité de points de station (6) pour le placement de matériaux bruts (16).

3. Le centre d'usinage vertical entièrement automatique à broches multiples selon la revendication 2, dans lequel la zone d'usinage comprend une table rotative d'appui (8) et des tables porte-pièce (14), le nombre des tables porte-pièce (14) est le même que celui des points de station (6) sur chaque zone de rechargement (15), et la zone de changeur d'outil comprend un porte-outil de chaîne et des dispositifs de coupe (11) fixés sur le porte-outil de chaîne.

4. Le centre d'usinage vertical entièrement automatique à broches multiples selon la revendication 3, dans lequel l'outil de serrage (12) peut être fixé sur le porte-outil de chaîne.

5. Le centre d'usinage vertical entièrement automatique à broches multiples selon la revendication 4, dans lequel le coulisseau (1) fixe une pluralité de têtes de broche (10) dont le nombre est le même que celui des tables porte-pièce (14), et les têtes de broche (10) peuvent être raccordées aux dispositifs de coupe (11) et à l'outil de serrage (12) par l'intermédiaire du mouvement.

6. Le centre d'usinage vertical entièrement automatique à broches multiples selon la revendication 5, dans lequel une distance sur laquelle la courroie transporteuse se meut à chaque fois est une distance entre toutes les deux zones de rechargement (15).

7. Le centre d'usinage vertical entièrement automatique à broches multiples selon la revendication 6, dans lequel la zone de changeur d'outil comprend en outre une porte (5) de changeur d'outil, et la porte (5) de changeur d'outil est agencée entre la zone de changeur d'outil et la zone d'usinage.
